Europäisches Patentamt

European Patent Office

Office européen des brevets

(19)

(11) Veröffentlichungsnummer: **0 297 622 B1**

(12) **EUROPÄISCHE PATENTSCHRIFT**

(45) Veröffentlichungstag der Patentschrift: **17.06.92**

(51) Int. Cl.⁵: **A01D 51/00**, A01D 33/10

(21) Anmeldenummer: **88110653.8**

(22) Anmeldetag: **04.07.88**

(54) **Fördereinrichtung für selbstfahrendes Rübenlade-und Reinigungsgerät.**

(30) Priorität: **03.07.87 DE 3721998**

(43) Veröffentlichungstag der Anmeldung:
**04.01.89 Patentblatt 89/01**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI NL SE**

(56) Entgegenhaltungen:
DE-A- 3 217 889       FR-A- 1 345 754
FR-A- 1 350 138       FR-A- 2 417 246
FR-E- 86 825          US-A- 3 961 469
US-A- 4 706 447

(73) Patentinhaber: **Holmer, Alfons**
**Regensburger Strasse 18**
**W-8301 Eggmühl(DE)**

(72) Erfinder: **Holmer, Alfons**
**Regensburger Strasse 18**
**W-8301 Eggmühl(DE)**

(74) Vertreter: **Wasmeier, Alfons, Dipl.-Ing. et al**
**Patentanwälte Wasmeier & Graf Postfach 10**
**08 26**
**W-8400 Regensburg 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Fördereinrichtung für selbstfahrende Rübenlade- und Reinigungsgeräte nach dem Oberbegriff des Anspruches 1.

Eine derartige Fördereinrichtung, wie sie z.B. aus der DE-OS 32 17 889 bekannt ist, ist so aufgebaut, daß die Rüben eine Rübenhaufens zum Verladen frontal von Aufnahmeschuhen aufgenommen werden, die die aufgenommenen Rüben auf einen Kettenförderer übergeben, von welchem sie durch querlaufende Siebbänder übernommen werden, die auf ein Längssiebband fördern, an derem Ende eine Übergabe auf ein weiteres Quersiebband erfolgt, über das die Rüben dann auf einen Transportwagen übergeführt werden. Fördereinrichtungen dieser Art haben wesentliche Nachteile insoferne, als die Vielzahl von verwendeten Förderbändern einen hohen und kostenintensiven Verschleiß ergeben, ein relativ hohes Gewicht haben, einen relativ hohen baulichen Aufwand erfordern, eine große Arbeitsbreite in Anspruch nehmen und Bodenunebenheiten schwierig angepaßt werden können.

Gegenstand der FR-A- 24 17 246 ist ein Rübenladefahrzeug mit einer frontseitigen Rübenaufnahmevorrichtung in Form asymmetrisch angeordneter Schneckenförderelemente, die die Rüben beidseitig in Querrichtung nach innen auf ein steil ansteigendes, umlaufendes Becherhubwerk fördern, das an der untersten Stelle Rüben in die Becher aufnimmt und an der obersten Stelle die Rüben in einen Rübenbunker mit Förderboden abgibt. Die Schneckenförderer sind hierbei nicht im Winkel aufeinander zu und voneinander weg verschwenkbar, und es sind auch keine den Schneckenförderern zugeordneten Siebsterne vorgesehen.

Aus der US-A- 39 61 469 ist eine Maschine zum Aufsammeln von auf dem Boden liegendem Obst, z.B. Zitrusfrüchten, bekannt, bei der zwei diametral auseinanderlaufende Arme mit Aufsammelwerkzeugen vorgesehen sind. Die Arme mit den Werkzeugen sind im Winkel zur Längsachse der Maschine verstellbar. Die Sammelwerkzeuge sind hierbei jedoch keine Schneckenförderer, des weiteren sind auch keine Siebsterne vorgesehen, die den Schneckenförderern zugeordnet sind und mit diesen zusammen arbeiten.

Bei Rübenerntemaschinen allgemein und Fördereinrichtungen der gattungsgemäßen Art im besonderen tritt in zunehmendem Maße das Problem auf, daß die Rüben an die Zuckerfabrik mit einem möglichst geringen Erdanteil angeliefert werden müssen, da die Beseitigung des an den Rüben haftenden Erdreiches erhebliche Schwierigkeiten und Kosten verursacht. Je nach Witterung und Bodenverhältnissen ist der Anteil an an den Rüben anhaftendem Erdreich relativ groß, so daß die Reinigung der Rüben beim Roden eine immer größere Bedeutung erlangt.

Aufgabe der Erfindung ist es demgegenüber, eine Fördereinrichtung der gattungsgemäßen Art so weiterzubilden, daß sie einem besonders geringen Verschleiß unterliegt, daß der bauliche und finanzielle Aufwand für Herstellung und Vertrieb einer derartigen Fördereinrichtung möglichst niedrig gehalten wird, daß die Fördereinrichtung auf einfache Weise den Anforderungen an die maximale Breite für Straßenfahrt angepaßt werden kann, und daß die Fördereinrichtung so ausgebildet ist, daß bereits bei der Förderung eins gewisse Vorreinigung der Rüben erreicht wird.

Gemäß der Erfindung wird dies mit den Merkmalen des Kennzeichens das Anspruches 1 erreicht. Weitere Ausgestaltungen der Erfindung sind Gegenstand der Unteransprüche.

Mit der erfindungsgemäßen Einrichtung ist ein Aufnehmen der Rüben von einem Rübenhaufen und ein Verladen bzw. Reinigen der Rüben möglich, bei dem ein besonders verschleißarmer Betrieb der verwendeten Förderelemente gewährleistet ist. Die für die Aufnahme der Rüben vom Rübenhaufen verwendeten Förderschnecken haben aufgrund ihres großen Durchmessers, der vorzugsweise größer als 1 m ist, eine extrem niedrige Drehzahl, wodurch einerseits eine schonende Behandlung der Rüben und andererseits ein praktisch verschleißfreier Betrieb der Förderschnecken wie auch die Verwendung eines Förderschneckenantriebes extrem kleiner Leistung möglich ist. Die Förderschnecken führen die aufgenommenen Rüben jeweils mindestens einem einer jeden Förderschnecke zugeordneten Siebstern zu, der sie bewährtes Element bei der Rübenbergung als verschleißarm und effektiv bekannt ist und in großem Umfang eingesetzt wird. Den Förderschnecken sind jeweils Siebsterne etwa gleichen bzw. angepaßten Durchmessers zugeordnet. Dabei bilden eine Förderschnecke und ein Siebstern jeweils eine Einheit, wobei vorzugsweise das Lagerrohr das Siebsternes einen Teilrahmen aufnimmt, in welchem die Förderschnecke gelagert ist.

Die Förderschnecke ist mit dem Siebstern in einer horizontalen Ebene verschwenkbar verbunden, z.B. dadurch, daß der Teilrahmen im siebsternnahen Bereich eine Gelenkstelle besitzt, um die verschwenkt wird. Eine Verschwenkung der Förderschnecke erfolgt dabei vorzugsweise so, daß der Abstand der Förderschnecke von dem Siebstern weitgehend unverändert bleibt. Diese Verschwenkung wird über einen mit dem Geräterahmen befestigten Kraftheber, z.B. einen hydraulischen Arbeitszylinder, der am Teilrahmen angreift, erzielt. Der Antrieb des Krafthebers kann jedoch auch motorisch oder mechanisch vorgenommen werden. Die Kraftheber für die beiden symmetrisch zur Fördereinrichtung angeordneten Einheiten können unabhängig voneinander oder synchron miteinander betätigbar sein, so daß eine beliebige Zustellung der Förderschnecken zu dem abzubauenden Rübenhaufen möglich ist.

Des weiteren sind die Förderschnecken gemeinsam oder wahlweise unabhängig voneinander in der vertikalen Ebene verschwenkbar angeordnet, damit eine Anpassung an Bodenunebenheiten und dergl. an der Rübenaufnahmestelle ermöglicht wird. Vorzugsweise erfolgt das Anheben der Förderschnecken um eine Schwenkstelle nahe dem Siebstern mit Hilfe von Krafthebern, z.B. hydraulischen Arbeitszylindern, die zwischen Geräterahmen und Teilrahmen der Förderschnecke befestigt sind und an letzterem angreifen sowie bei Betätigung diesen Teilrahmen mit Förderschnecke schwenken. Damit wird erreicht, daß die Förderschnecken mit ihrem vorderen, dem Rübenhaufen zugewandten Ende den Bodenunebenheiten entsprechend angehoben bzw. abgesenkt werden können, so daß verhindert wird, daß die Förderschnecken entweder in den Boden einarbeiten und Erdreich fördern, oder aber zu hoch über dem Boden liegend arbeiten, als daß die untersten Rüben im Haufen aufgenommen werden.

Ein Träger des Geräterahmens nimmt die beiden nebeneinander angeordneten und miteinander zusammenwirkenden Siebsterne auf und ist selbst am Geräterahmen pendelnd aufgehängt bzw. über eine Dreipunktaufhängung mit dem Geräterahmen verbunden. Durch diese pendelnde Aufhängung wird ein ausgleich von Bodenunebenheiten und dergl. erzielt.

Die Förderschnecken und die Siebsterne sind jeweils über Ölmotoren, Gelenkwellen oder dergl. einzeln und zusammenschaltbar angetrieben. Durch Mengenregler oder Verstellpumpen läßt sich die Drehzahl der einzelnen Förderelemente unabhängig voneinander oder auch gemeinsam steuern.

Um zu verhindern, daß die Förderschnecken unmittelbar auf dem Boden gleiten, wird zur Verbesserung ihrer Effektivität jede Förderschnecke mit einer Schleifkufe ausgerüstet, die sich vorzugsweise über im wesentlichen die gesamte Länge der Förderschnecke erstreckt. Diese Schleifkufe ist beispielsweise an dem Förderschneckenmantel befestigt, der die Förderschnecke teilweise umgibt, um ein einwandfreies Abfördern der Rüben zu gewährleisten.

Die Förderschnecken sind aufeinander zu und voneinander weg in der horizontalen Ebene verschwenkbar angeordnet, so daß ihre Zustellung zum Rübenhaufen veränderbar ist. Der Zustellwinkel ist kontinuierlich zwischen 0 und 90° einstellbar. Wenn die beiden Förderschnecken achsparallel zueinander angeordnet sind (Schwenkwinkel 0°), arbeiten die beiden Förderschnecken mit ihrer Stirnfläche gegen die Stirnwand des Rübenhaufens. Werden die beiden Förderschnecken voneinander weg verschwenkt, arbeiten sie in spitzem Winkel in den Rübenhaufen, und wenn die Achsen der beiden Förderschnecken parallel zueinander bzw. in einer Linie liegen (Schwenkwinkel 90°), arbeiten sie mit ihrer Umfangs- bzw. Mantelfläche in die Stirnfläche des Haufens. In letzterer Stellung der Förderschnecken kann ein Rübenhaufen mit einer Breite entsprechend der doppelten Länge einer Förderschnecke über die volle Stirnwand des Rübenhaufens abgebaut werden, so daß Rübenhaufen praktisch beliebiger Breite abgebaut werden können. Werden die beiden Förderschnecken aufeinander zu geschwenkt, bis die Längsachsen der beiden Förderschnecken parallel zueinander verlaufen, kann auch der letzte Rest von Rüben eines Rübenhaufens einwandfrei aufgenommen werden, was mit herkömmlichen Maschinen in der Regel nicht erreichbar ist.

Das Ein- und Ausschwenken der Förderschnecken kann auch durchgeführt werden, wenn die Förderschnecken in der vertikalen Ebene um eine in der Nähe der Siebräder liegende Schwenkstelle angehoben werden. Schwenkbewegungen in der horizontalen und in der vertikalen Ebene können einander überlagert werden.

Zur Verbesserung der Reinigungswirkung der Förderschnecken wird vorgeschlagen, die Wendeln der Förderschnecken auf ihrem Außenumfang bzw. im Bereich des Außenumfanges jeweils mit nach außen vorstehenden Zinken, Fingern oder dergl. Elementen zu versehen, die mit den Rüben bei der Aufnahme der Rüben aus dem Rübenhaufen in Eingriff kommen und dabei zumindest einen Teil des an den Rüben anhaftenden Erdreiches ablösen; das Erdreich fällt zwischen den Zinken, Fingern oder dergl. aus den Förderschnecken nach abwärts auf den Boden. Die Zinken können als Einzelzinken fest oder auswechselbar mit dem Umfang der Wendeln befestigt sein, sie können andererseits eine kontinuierliche, kammförmige Leiste mit Abstand zwischen den einzelnen Zähnen darstellen, wobei die Leiste dann mit dem äußeren Bereich der Wendel lösbar befestigt ist und damit der Zinkenstreifen leicht auswechselbar ist. Die Zinken oder dergl. sind dabei federnd ausgebildet, um eine ausreichende Nachgiebigkeit dieser Zinken zu erreichen und zu verhindern, daß die Zinken beim Auftreffen z.B. auf Steine brechen. Außerdem wird durch die federnde Ausgestaltung der Zinken der Reinigungseffekt wesentlich verbessert.

In weiterer Ausgestaltung der Erfindung wird vorgeschlagen, den Förderschnecken jeweils eine Vorrichtung zuzuordnen, die zwischen Förderwalze und Rübenhaufen angeordnet ist und die in den unteren Bereich des Rübenhaufens einwirkt, um die Rüben aus dem Haufen zu lösen und auf die Förderschnecke zu übergeben. Diese Vorrichtung ist vorzugsweise ein achsparallel zur Förderschnecke angeordneter Zylinder mit auf der Mantelfläche nach außen vorstehenden Zinken, Fingern, Zacken oder dergl. Elementen, die einerseits die Rüben aus dem Haufen lockern und andererseits zumindest einen Teil des an den Rüben anhaftenden Erdreiches bei diesem Lockerungsvorgang lösen sowie die gelösten Rüben auf die Förderschnecke überführen. Die Vorrichtung ist in Bodennähe angeordnet und umlaufend ausgebildet, wobei die Laufrichtung mit der Laufrichtung der Förderschnecke übereinstimmt.

Nachstehend wird die Erfindung in Verbindung mit der Zeichnung anhand eines Ausführungsbeispieles erläutert. Es zeigt:

Fig. 1    eine schematische Aufsicht auf die Fördereinrichtung nach der Erfindung,

Fig. 2    eine schematische Seitenansicht einer Förderschnecke am Rübenhaufen,

Fig. 3    die Lagerung eines Siebsternes und einer damit verbundenen Förderschnecke in schematischer Darstellung,

Fig. 4    eine spezielle Ausführungsform einer Förderschnecke der Fördereinrichtung nach Fig. 1,

Fig. 5    eine mit der Förderschnecke zusammenwirkende Vorrichtung zum Lösen der Rüben vom Rübenhaufen und zum Übergeben der Rüben auf die Förderschnecke, mit Blick in Achsrichtung der Förderschnecke, und

Fig. 6    die Anordnung nach Fig. 5 in einer um 90° versetzten Ansicht von oben.

Ein Rübenhaufen ist schematisch mit 1 dargestellt, seine Längsachse mit 2, die Seitenbegrenzungen mit 3 und 4 sowie die Stirnfläche mit 5. Dem Rübenhaufen 1 zugeordnet und an ihm angreifend ist eine Förderschnecke 6, die Gewindegänge 7 mit abgerundeten Kanten zur schonenden Förderung der Rüben aufweist, angeordnet. Die Längsachse der Förderschnecke ist mit 8 bezeichnet. 9 und 10 sind die beiden Enden der Welle, auf der die Förderschnecke 6 gelagert ist und über die die Schnecke angetrieben wird. Die Lagerstellen 9 und 10 sind von einem Teilrahmen 11 aufgenommen, der aus einem Flanschteil 12 zur Aufnahme des Wellenstummels 10, aus einem Längsträger 13 und einem Flansch 14 zur Aufnahme des Wellenstummels 9, sowie aus einem an den Längsträger 13 anschließenden Tragarm 15 besteht, der z.B. an der Lagerung 16 des Siebsternes 17 befestigt ist. Der Tragarm 15 ist mit dem Längsträger 13 so verbunden, daß die Förderschnecke 6 sowohl in der horizontalen als auch in der vertikalen Ebene verschwenkbar ist. Die Verschwenkung der Förderschnecke in der horizontalen Ebene erfolgt z.B. in der Lagerung 16 um die Achse des Siebrades 17, die Verschwenkung in der vertikalen Ebene um die Lagerstelle 18, wobei der Längsträger 13 eine Lagerbuchse aufweist, in der der Tragarm 15 gelagert ist. Mit 19 ist schematisch eine Längsverstelleinrichtung angedeutet, mit der die Zustellung der Förderschnecke 6 zum Siebstern 17 veränderbar ist. Die Verstelleinrichtung 19 kann wahlweise zusätzlich oder alternativ als Höhenverstellung ausgebildet sein, um die Förderschnecke 6 relativ zum Siebstern 17 in geringem Ausmaß anheben zu können.

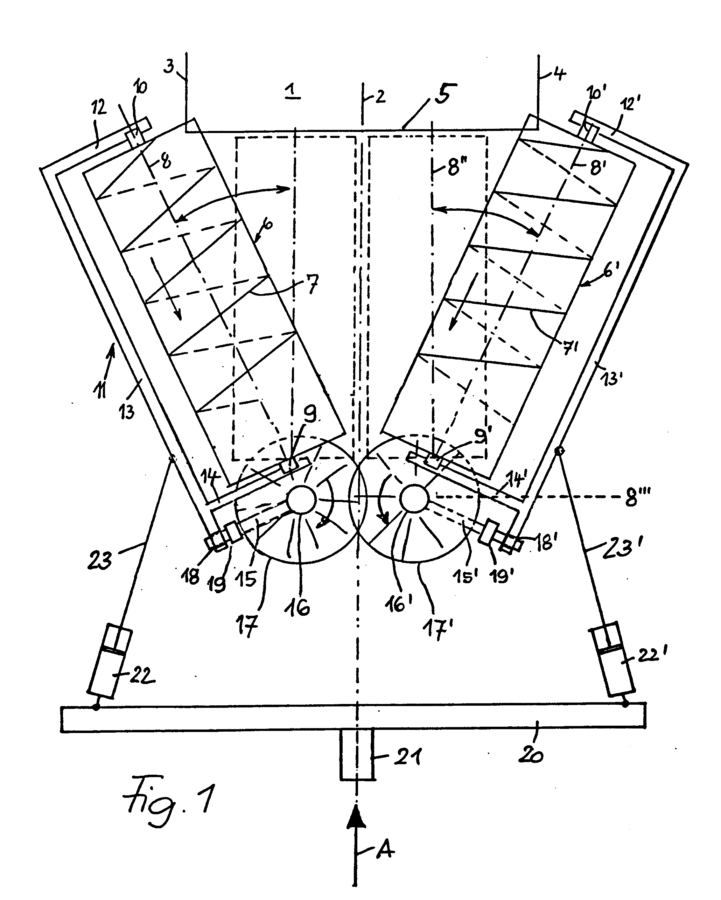

Der die Siebsterne 15, 15` und die Förderschnecken 6, 6` aufnehmende Rahmenteil bzw. Träger des Geräterahmens ist mit 20 bezeichnet. Dieser Rahmenteil 20 ist bei 21 pendelartig am (nicht dargestellten) Gerätehauptrahmen aufgehängt oder durch eine (nicht dargestellte) Dreipunktaufhängung mit der Maschine befestigt. Am Rahmenteil 20 ist ein Kraftheber 22 befestigt, der beispielsweise als Hydraulikzylinder ausgebildet ist und dessen Hubarm 23 mit dem Längsträger 13 des Teilrahmens 11 fest verbunden ist, so daß ein Verschwenken des Teilrahmens 11 mit Förderschnecke 6 in der horizontalen Ebene möglich ist. Ein Verschwenken des Teilrahmens 11 in der vertikalen Ebene erfolgt z.B. in der Weise, daß das freie Ende des Längsträgers 13 eine koaxiale Muffe 18 aufweist, die den Tragarm 15 aufnimmt, und daß ein nicht dargestellter Kraftheber zwischen Rahmenteil 20 und Längsträger 13 (entsprechend dem Kraftheber 22, jedoch in einer zu dessen Wirkebene senkrechten Wirkebene) angeordnet ist. Die Arbeitsstellung der Förderschnecke 6 liegt in einem kontinuierlich einstellbaren Winkelbereich von 0 bis etwa 90°. Damit läßt sich erreichen, daß der abzubauende Rübenhaufen beliebig breit sein kann, wenn die Achsen 8, 8' der beiden Förderschnecken 6, 6' in einer Linie liegen, so daß die Mantelflächen der Förderschnecken 6, 6' in ihrer vollen Länge in die Stirnseite 5 des Rübenhaufens 1 einwirken, aber auch, daß die beiden Förderschnecken in der in Fig. 1 strichpunktiert dargestellten Position, in der die beiden Achsen parallel zueinander verlaufen, also die Förderschnecken vollständig aneinander geschwenkt sind, den letzten Rest Rüben eines abgebauten Rübenhaufens sicher aufnehmen können. Mit 8" ist die Lage der Längsachse angedeutet, in der die Förderschnecke 6 vollständig nach innen geschwenkt ist und in der die Längsachse 8" parallel zur Längsachse 2 (die der Bewegungsrichtung des Gerätes entspricht) des Rübenhaufens verläuft. Mit 8‴ ist die andere Extremstellung der Förderschnecke 6' angedeutet, in der die Längsachse 2 im rechten Winkel zur Achse 8‴ verläuft.

Die Anordnung aus Förderschnecke und Siebstern ist in Fig. 1 symmetrisch zur Längsachse des Ladegerätes, die mit der Achse 2 zusammenfällt, ausgebildet, d.h., daß die Elemente 6 - 23 zu beiden Seien der Längsachse symmetrisch und identisch vorgesehen sind; die Bezugsziffern der Anordnung auf der rechten Seite entsprechen denen der Anordnung auf der linken Seite mit einem " ′ ".

Von den Siebsternen 17, 17′ werden die geförderten Rüben auf Sieb-Wendewalzen, ein Siebband oder eine entsprechende, an sich bekannte Rübentransportvorrichtung zum Abtransport übergeben.

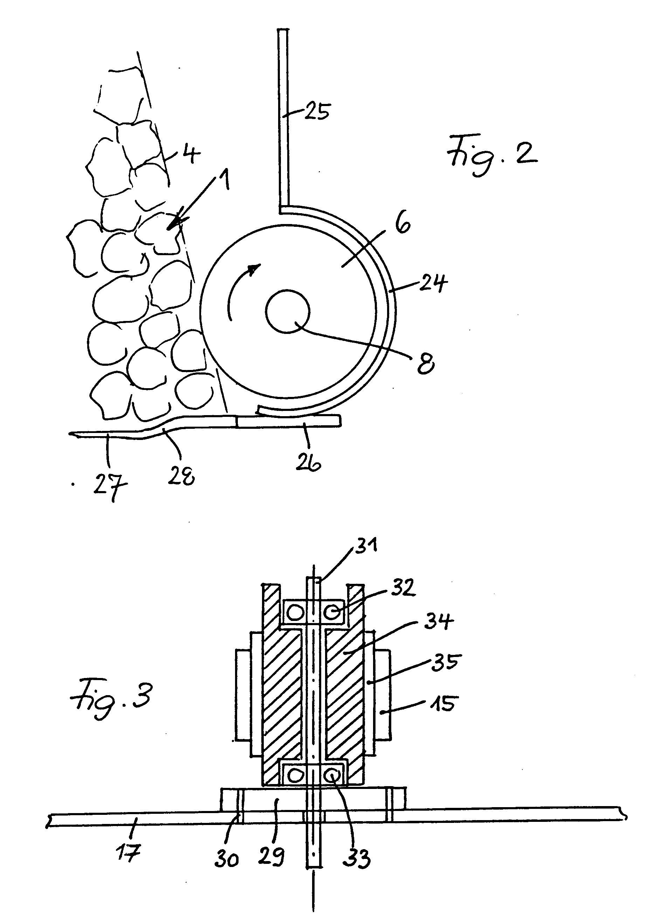

Bei der Darstellung nach Fig. 2 ist der Rübenhaufen 1 mit seiner Seitenbegrenzung 4 schematisch angedeutet und die Förderschnecke 6 schemtisch in Eingriff mit den Rüben des Haufens 1 dargestellt. Die zylindrische Förderschnecke 6 mit ihrer Welle 8 ist in Pfeilrichtung umlaufend angetrieben und greift mit ihrem Umfang und den Schneckenwindungen in den unteren Teil des Haufens ein, wodurch die Rüben gelöst und in Umfangsrichtung mitgenommen werden. Die Förderschnecke 6 ist auf dem vom Rübenhaufen 1 abgewandten Abschnitt von einem teilzylinderförmigen Schneckenmantel 24 umgeben, der beispielsweise, wie in Fig. 2 dargestellt, ein Schutzgitter 25 oder eine entsprechende Trennwand aufnimmt, die nach oben verläuft und die verhindert, daß die von dem Haufen 1 abrollenden Rüben die Förderschnecke 6 von oben her zudecken.

Bei einer in Fig. 2 dargestellten Variante ist im unteren Bereich des Schneckenmantels 24, der eine Schleifkufe 26 starr befestigt, auf der die Förderschnecke 6 sich über den Erdboden bewegt. Die Schleifkufe 26 kann jedoch bei einer anderen Ausführungsform auch an dem Teilrahmen 11 befestigt sein. An der Schleifkufe 26, die sich in Richtung der Längsachse 8 der Förderschnecke 6 erstreckt und deren Länge etwa der der Förderschnecke entsprechen kann, sind ein oder mehrere Zinken 27 befestigt, die quer zur Längsachse der Förderschnecke 6 gerichtet sind und die bei 28 eine Kröpfung aufweisen, so daß sie die Rüben untergreifen und damit zur Lockerung der Rüben beitragen. Derartige Zinken können jedoch entfallen oder auch in anderer Weise ausgebildet sein, ohne daß die Erfindung dadurch beschränkt wird.

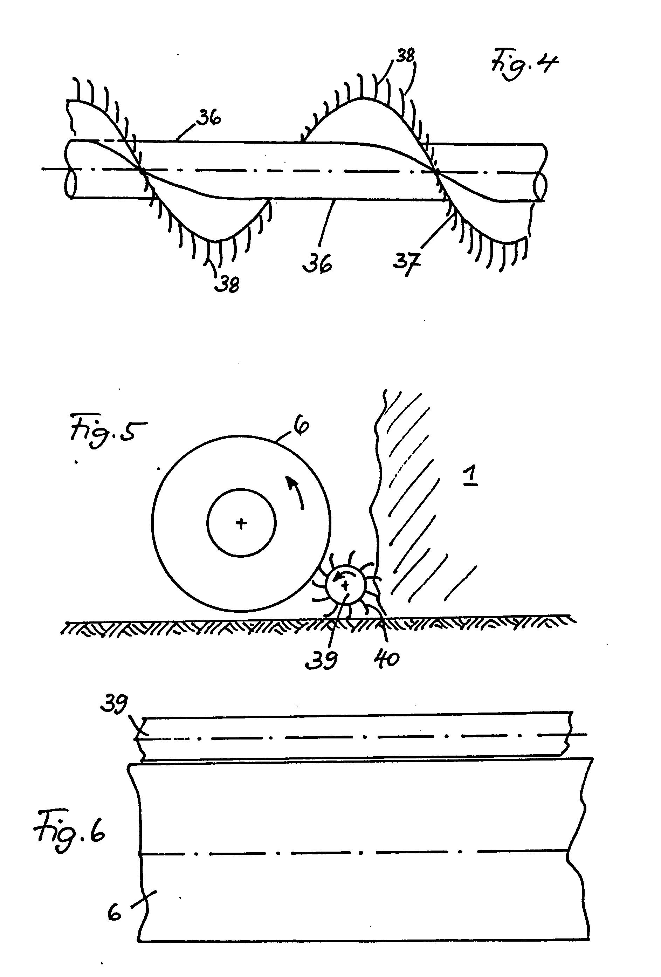

In Fig. 3 ist eine Ausführungsform einer Verbindung zwischen Siebstern (17) und Förderschnecke 6 dargestellt. Auf dem Siebstern (17) ist eine Aufnahmeplatte 29 befestigt, z.B. durch Schraubverbindung 30. Die Antriebswelle 31 für den Siebstern ist bei 32 und 33 gelagert. Mit 34 ist ein die Antriebswelle und die beiden Lagerungen umschließendes Lagerrohr 34 dargestellt, auf dem ein Führungsrohr 35 angeordnet ist, das mit dem Trägerarm 15 des Teilrahmens 11 der Förderschnecke 6 verbunden ist.

Die Förderschnecke 6 nach Fig. 1 ist in Fig. 4 in der Weise ausgebildet bzw. abgeändert, daß die Wendel 37, die das Rohr 36 spiralförmig umgibt, an ihrem äußeren Rand eine Vielzahl von im Abstand voneinander angeordneten Zinken 38 aufweist, die von der Umfangsbegrenzung der Wendel nach außen stehen und beispielsweise an ihrem äußeren Ende entgegen der Förderrichtung gebogen sind. Diese Zinken 38 sind in einem relativ kleinen Abstand voneinander angeordnet und dienen dazu, vor der eigentlichen Reinigung einen Teil des Erdreiches von den durch die Schneckenförderer geförderten Rüben zu entfernen. Ihr Abstand ist dadurch bestimmt, daß das von den Rüben gelöste Erdreich bequem zwischen jeweils zwei benachbarten Zinken zu Boden fallen kann. Die Zinken 38 sind vorzugsweise elastisch nachgiebig ausgebildet, bestehen z.B. aus Federstahl und sind mit den Umfangsrändern der Schneckenwendel verschweißt oder damit auswechselbar verbunden.

Die Steigung der Wendel ist sehr groß gehalten, und ist vorzugsweise größer als der Durchmesser des Schneckenrohres, damit eine gut schaufelnde Wirkung auf die Rüben ausgeübt wird, wenn die Förderschnecke in Drehung versetzt wird.

Bei einer weiteren Ausführungsform der Erfindung nach Fig. 5 bzw. 6 ist der Förderschnecke 6 bzw. 36, 37 eine achsparallele, zylindrische Vorrichtung 39 mit Zinken bzw. Zacken 40 zugeordnet, die in den unteren Bereich des Rübenhaufens 1 eingreift und die im Rübenhaufen 1 teilweise sehr kompakt und verdichtet angeordneten Rüben lokkert und den Förderschnecken 6 zuführt. Gleichzeitig bewirkt diese Vorrichtung 39, daß die vom Rübenhaufen 1 gelockerten Rüben vorgereinigt werden, indem die Zinken bzw. Zacken 40 beim Lösen der Rüben aus dem Rübenhaufen einen Teil des an den Rüben anhaftenden Erdreiches abstreifen, so daß dieses Erdreich zu Boden fallen kann.

## Patentansprüche

1. Einrichtung für ein Rübenladegerät, mit einer Vorrichtung (6) zum Aufnehmen von Rüben von einem Rübenhaufen (1) und mit einer Vorrichtung (17) zum Übergeben und Weiterbefördern der Rüben an eine Vorrichtung zum Reinigen und Abtransportieren der Rüben, wobei die Vorrichtung zum Aufnehmen und Abfördern der Rüben aus mindestens einem Paar von Förderschnecken (6, 6') besteht, deren Längsachsen (8, 8') etwa horizontal angeordnet und von einem Rahmenteil (20) aufgenommen sind, **dadurch gekennzeichnet, daß**

   a) die Vorrichtung (17) zum Übergeben und Weiterbefördern der Rüben aus mindestens einem Paar von in einer etwa horizontalen Ebene im Rahmenteil (20) gelagerten, umlaufenden Siebsternen (17, 17') besteht,

   b) jeweils ein Siebstern (17, 17') einer Förderschnecke (6, 6') zugeordnet und ihr in Arbeitsrichtung nachgeschaltet ist, und

c) die Förderschnecken (6, 6') im Winkel zur Symmetrieachse (A) der Einrichtung in der horizontalen Ebene jeweils um eine Achse (16, 16') des zugeordneten Siebsternes (17, 17') drehbar und im Winkel zur Symmetrieachse (A) in der vertikalen Ebene um eine horizontale Achse schwenkbar angeordnet sind.

2. Einrichtung nach Anspruch 1, dadurch gekennzeichnet, daß die Wellen (8, 8') der Förderschnecken (6, 6') an beiden Enden (9, 10, 9', 10') in einem Teilrahmen (11, 11') gelagert sind, der jeweils mit dem Lagerrohr (34, 34') eines Siebsternes (17, 17') befestigt ist, und daß zwischen Rahmenteil (20) und Teilrahmen (11, 11') eine Antriebsvorrichtung (22, 23, 22', 23'), z.B. ein Hydraulik-Arbeitszylinder, angeordnet ist, mit deren Hilfe der Teilrahmen (11, 11') mit Förderschnecke (6, 6') in der horizontalen Ebene verschwenkbar ist.

3. Einrichtung nach ein Anspruch 1 oder 2, dadurch gekennzeichnet, daß der Teilrahmen (11, 11') im siebsternnahen Abschnitt jeweils eine Gelenkstelle (18, 18') aufweist, mit deren Hilfe die Förderschnecke (6, 6') in ihrer Längsachse in einer vertikalen Ebene um diese Gelenkachse schwenkbar ist.

4. Einrichtung nach einem der Ansprüche 1 - 3, dadurch gekennzeichnet, daß jede Förderschnecke (6, 6') und jeder Siebstern (17, 17') einzeln motorisch angetrieben ist, und daß die jeweiligen Einheiten aus Förderschnecke und Siebsterne unabhängig voneinander wie auch synchron zueinander betätigbar sind.

5. Einrichtung nach einem der Ansprüche 1 - 4, dadurch gekennzeichnet, daß im siebsternnahen Abschnitt des Teilrahmens eine Einstellvorrichtung (19, 19') zur Längen- und/oder Höhenverstellung des Teilrahmens (11, 11') vorgesehen ist.

6. Einrichtung nach einem der Ansprüche 1 - 5, dadurch gekennzeichnet, daß jeder Förderschnecke (6, 6') eine Schleifkufe (26, 26') zugeordnet ist, über die die Förderschnecke auf dem Boden abgestützt ist, bzw. daß der Teilrahmen (11, 11') der Förderschnecke (6, 6') eine Schleifkufe (26, 26') aufnimmt, auf der die Förderschnecke mit dem Teilrahmen auf dem Boden abgestützt ist.

7. Einrichtung nach Anspruch 1, dadurch gekennzeichnet, daß der die Förderschnecke (6,6') aufnehmende Teilrahmen (11, 11') so an der Siebsternlagerung (31, 32, 33, 34, 35) befestigt ist, daß der Abstand von der Mitte des Siebsternes (17) zur Förderschnecke (6) beim Verschwenken in der etwa horizontalen Ebene im wesentlichen aufrecht erhalten bleibt.

8. Einrichtung nach einem der Ansprüche 1 oder 6, dadurch gekennzeichnet, daß die Schleifkufe (26) sich in horizontaler Richtung quer zur Symmetrieachse (A) erstreckende Zinken (27) aufnimmt, deren freies Ende zum Rübenhaufen (1) gabelartig (bei 28) gebogen ist.

9. Einrichtung nach Anspruch 1, dadurch gekennzeichnet, daß am oder auf dem Umfang der Schneckenwendel (37) der Förderschnecke (6, 6') etwa in radialer Richtung nach außen verlaufende, kammartig ausgebildete, einene Abstand voneinander aufweisende Zinken, Finger oder dergl. Elemente (38) befestigt sind, die eine Vorreinigung der aus dem Rübenhaufen (1) entnommenen Rüben bewirken.

10. Einrichtung nach Anspruch 1, dadurch gekennzeichnet, daß der Förderschnecke (6, 6') auf der dem Rübenhaufen (1) zugewandten Seite eine achsparallele, bodennah angeordnete, rotierende Vorrichtung (39, 40) zugeordnet ist, die Rüben aus dem untersten Bereich des Rübenhaufens (1) lockert und die die Übergabe der Rüben auf die Förderschnecken (6, 6') unterstützt sowie eine Vorreinigung der gelösten Rüben vornimmt, wobei die Vorrichtung (39, 40) vorzugsweise als zylindrisches Element mit auf der Mantelfläche angeordneten Zinken, Fingern oder dergl. etwa radial nach außen vorstehenden Elementen (40) versehen ist.

**Claims**

1. Mechanism for a beet loader, with a means (6) for taking up beet from a beet pile (1) and with a means (17) for transferring and conveying on the beet to a means for cleaning and transporting away the said beet, the latter means comprising at least one pair of screw conveyors (6,6'), whose longitudinal axes (8,8') are positioned roughly horizontally and are received by a frame part (20), characterized in that

   a) the means (17) for transferring and conveying on the beet comprises at least one pair of rotating screening star wheels (17,17') mounted in a roughly horizontal plane in the frame part (20),

   b) in each case one screening star wheel (17,17') is associated with a screw conveyor (6,6') and follows the same in the working direction and

c) the screw conveyors are rotatable at an angle to the axis of symmetry (A) of the mechanism in the horizontal plane and in each case about an axis (16,16') of the associated screening star wheel (17,17') and are pivotably arranged about a horizontal axis at an angle to the axis of symmetry (A) in the vertical plane.

2. Mechanism according to claim 1, characterized in that the shafts (8,8') of the screw conveyors (6,6') are mounted at both ends (9,10,9',10') in a partial frame (11,11'), which is in each case fixed to the bearing tube (34,34') of a screening star wheel (17,17') and that between the frame part (20) and the partial frames (11,11') is provided a drive mechanism (22,23,22',23'), e.g. a hydraulic power cylinder, with the aid of which the partial frame (11,11') can be pivoted with the screw conveyor (6,6') in the horizontal plane.

3. Mechanism according to claims 1 or 2, characterized in that the partial frame (11,11') has a moving joint (18,18') in the portion close to the screening star wheel and with the aid thereof the screw conveyor (6,6') can be pivoted about said joint axis in the longitudinal axis thereof in a vertical plane.

4. Mechanism according to one of the claims 1 to 3, characterized in that each screw conveyor (6,6') and each screening star wheel (17,17') is individually motor driven and that the units formed by the screw conveyor and the screening star wheels are operable independently of one another and synchronously to one another.

5. Mechanism according to one of the claims 1 to 4, characterized in that in the portion of the partial frame close to the screening star wheel is provided an adjusting device (19,19') for adjusting the length and/or height of the partial frame (11,11').

6. Mechanism according to one of the claims 1 to 5, characterized in that with each screw conveyor (6,6') is associated a sliding runner (26,26') by means of which the screw conveyor is supported on the ground or that the partial frame (11,11') of the screw conveyor (6,6') receives a sliding runner (26,26') on which the screw conveyor with the partial frame is supported on the ground.

7. Mechanism according to claim 1, characterized in that the partial frame (11,11') receiving the screw conveyor (6,6') is so fixed to the screening star wheel mounting (31,32,33,34,35) that the spacing from the centre of the screening star wheel (17) to the screw conveyor (6) is substantially maintained during pivoting in the roughly horizontal plane.

8. Mechanism according to one of the claims 1 or 6, characterized in that the sliding runner (26) receives teeth (27) extending horizontally at right angles to the axis of symmetry (A) and whose free end is bent at (28) in fork-like manner towards the beet pile (1).

9. Mechanism according to claim 1, characterized in that to the circumfernce of the screw helix (37) of the screw conveyor (6,6') are fixed roughly radially outwardly directed, comb-like, spaced teeth, fingers or similar members (38), which bring about a precleaning of the beet removed from the beet pile (1).

10. Mechanism according to claim 1, characterized in that with the side of the screw conveyor (6,6') facing the beet pile (1) is associated an axially parallel, ground-near, rotating mechanism (39,40), which loosens beet from the bottom area of the beet pile (1) and assists the transfer of the beet to the screw conveyors (6,6'), whilst carrying out a precleaning of the released beet, the mechanism (39,40), preferably as a cylindrical member, is provided with teeth, fingers or similar roughly radially outwardly projecting members (40) located on the circumferential surface.

**Revendications**

1. Dispositif pour un appareil de chargement de betteraves avec un dispositif (6) pour le ramassage de betteraves d'un tas de betteraves (1) et un dispositif (17) pour délivrer et transporter ultérieurement les betteraves à un dispositif pour le nettoyage et l'enlèvement des betteraves, le dispositif pour le ramassage et le transport des betteraves étant constitué par au moins une paire de vis transporteuses (6, 6') dont les axes longitudinaux (8, 8') sont disposés approximativement horizontalement et sont logés par une partie de cadre (20), caractérisé en ce que

a) le dispositif (17) pour délivrer et transporter ultérieurement les betteraves est constitué par au moins une paire d'étoiles de criblage (17, 17') tournantes montées dans un plan approximativement horizontal dans la partie de cadre (20),

b) chaque étoile de criblage (17, 17') est associée à une vis transporteuse et est placée à sa suite en direction de travail et

c) les vis transporteuses (6, 6') sont montées respectivement de manière à pouvoir tourner dans l'angle formé avec l'axe de symétrie (A) du dispositif dans un plan horizontal autour d'un axe (16, 16') de l'étoile de criblage correspondante et de manière à pouvoir pivoter en formant un angle avec l'axe de symétrie, dans le plan vertical autour d'un axe horizontal.

2. Dispositif selon la revendication 1 caractérisé en ce que les arbres (8, 8') des vis transporteuses (6, 6') sont logés aux deux extrémités (9, 10, 9', 10') dans des cadres partiels (11, 11') qui sont chacun fixés sur les tubes-paliers 34, 34') des étoiles de criblage (17, 17') et un dispositif d'actionnement (22, 23, 22', 23'), par exemple un vérin hydraulique, est disposé entre la partie de cadre (20) et les cadres partiels (11, 11') au moyen duquel le cadre partiel (11, 11') avec la vis transporteuse (6, 6') est pivotable dans le plan horizontal.

3. Dispositif selon l'une des revendications 1 ou 2 caractérisé en ce que les cadres partiels (11, 11') comportent dans la partie proche de l'étoile de criblage chaque fois un axe d'articulation (18, 18') au moyen duquel la vis transporteuse (6, 6') est pivotable dans son axe longitudinal dans un plan vertical autour de cet axe d'articulation.

4. Dispositif selon l'une des revendications 1 à 3 caractérisé en ce que chacune des vis transporteuses (6, 6') et chacune des étoiles de criblage (17, 17') sont commandées individuellement par un moteur et les unités respectives formées par les vis transporteuses et les étoiles de criblage peuvent être actionnées indépendamment l'une de l'autre de même que de manière synchrone l'une par rapport à l'autre.

5. Dispositif selon l'une des revendications 1 à 4 caractérisé en ce que dans la partie du cadre partiel proche de l'étoile de criblage on prévoit un dispositif de réglage (19, 19') pour le réglage en longueur et/ou en hauteur du cadre partiel (11, 11').

6. Dispositif selon l'une des revendications 1 à 5 caractérisé en ce qu'un patin (26, 26') correspond à chacune des vis transporteuses (6, 6'), patin au moyen duquel la vis transporteuse prend appui sur le sol ou le cadre partiel (11, 11') de la vis transporteuse (6, 6') reçoit un patin (26, 26') au moyen duquel la vis transporteuse avec le cadre partiel est supportée par le sol.

7. Dispositif selon la revendication 1 caractérisé en ce que le cadre partiel (11, 11') logeant la vis transporteuse (6, 6') est monté sur le palier de l'étoile de criblage (31, 32, 33, 34, 35) de manière telle que la distance du milieu de l'étoile de criblage (17) à la vis transporteuse (6) est sensiblement maintenue lors du pivotement dans le plan approximativement horizontal.

8. Dispositif selon l'une des revendications 1 ou 6 caractérisé en ce que le patin (26) reçoit des saillies (27) s'étendant en direction horizontale transversalement à l'axe de symétrie (A), saillies dont l'extrémité libre est recourbée à la manière d'une fourche (en 28) vers le tas de betteraves (1).

9. Dispositif selon la revendication 1 caractérisé en ce que des dents, des doigts ou des éléments analogues (38) présentant une distance l'un par rapport à l'autre, agencés en peigne, disposés approximativement radialement vers l'extérieur, sont fixés à la ou sur la périphérie de l'hélice (37) de la vis transporteuse (6, 6'), ces éléments produisant un pré-nettoyage des betteraves prélevées à partir du tas de betteraves (1).

10. Dispositif selon la revendication 1 caractérisé en ce qu'à la vis transporteuse (6, 6') est associée sur le côté en regard du tas de betteraves (1), au voisinage du sol, un dispositif rotatif (39, 40) à axe parallèle à celui de la vis transporteuse, qui produit le dégagement de betteraves de la zone la plus basse du tas de betteraves (1), qui aide au transfert des betteraves sur la vis transporteuse (6, 6') et qui effectue un pré-nettoyage des betteraves détachées, le dispositif (39, 40), de préférence sous forme d'élément cylindrique comportant des dents, des doigts ou des éléments analogues (40) faisant saillie approximativement radialement vers l'extérieur sur la surface latérale.

Fig. 1

Fig. 2

Fig. 3

Fig. 4

Fig. 5

Fig. 6